# EUROPÄISCHE PATENTSCHRIFT

(11) **EP 3 017 917 B1**
(45) Veröffentlichungstag und Bekanntmachung des Hinweises auf die Patenterteilung: **03.11.2021**
(21) Anmeldenummer: 15190549.4
(22) Anmeldetag: 20.10.2015
(51) Int. Cl.: B25J 9/16, B25J 19/00, B25J 9/12

(54) **VERFAHREN UND SYSTEM ZUM STILLSETZEN VON ACHSEN EINES INDUSTRIEROBOTERS**
METHOD AND SYSTEM FOR STOPPING AXLES OF AN INDUSTRIAL ROBOT
PROCEDE ET SYSTEME D'IMMOBILISATION D'AXES D'UN ROBOT INDUSTRIEL

(30) Priorität: 06.11.2014 DE 102014222678
(43) Veröffentlichungstag der Anmeldung: 11.05.2016
(73) Patentinhaber: KUKA Deutschland GmbH, 86165 Augsburg (DE)
(72) Erfinder: GEILER, Torsten, 86179 Augsburg (DE); RUDOLF, Richard, 86161 Augsburg (DE)
(74) Vertreter: Mader, Joachim

(56) Entgegenhaltungen:
- EP-A1- 1 857 229
- EP-A2- 2 631 043
- DE-A1-102008 027 754
- DE-T5- 10 394 302
- US-A- 5 587 640

## Beschreibung

### 1. Gebiet der Erfindung

Die Erfindung betrifft ein Verfahren und ein System zum Stillsetzen von Achsen eines Industrieroboters.

### 2. Hintergrund

Industrieroboter sind automatisch geführte, mit drei oder mehr frei programmierbaren Achsen ausgerüstete Handhabungsmaschinen, die zur selbsttätigen Handhabung von Objekten mit zweckdienlichen Werkzeugen ausgerüstet sind. Sie können mobil oder ortsfest eingesetzt werden. Diese Roboter sind für den Einsatz im industriellen Umfeld konzipiert (z. B. Automobilfertigung) und umfassen im Allgemeinen einen Manipulator (Roboterarm), eine Steuereinrichtung sowie Antriebsmittel zum Bewegen des Manipulators. Oftmals wird sowohl der Antrieb als auch der Manipulator mittels Sensoren überwacht. Die Überwachung dient der Steuerung und Regelung des Antriebs. Der Antrieb kann beispielsweise ein elektrischer Antrieb sein, der eine Leistungselektronik und einen elektrischen Motor umfasst.

In bestimmten Situationen, z.B. wenn eine Person eine den Industrieroboter umgebende Schutzvorrichtung betritt oder vorbestimmte Grenzwerte für Motor- oder Achsparameter überschritten werden, ist es notwendig, die Bewegung des Industrieroboters zuverlässig und schnell zu stoppen und somit die Achse(n) des Roboters sicher stillzusetzen. Ziel des sicheren Stillsetzens ist es, Gefahr bringende Bewegungen zu verhindern, um Maschinen, Werkstücke und insbesondere Personen nicht zu gefährden.

Die Norm EN 60204-1 unterscheidet dabei drei Kategorien des sicheren Stillsetzens von Robotern:
Kategorie 0: Ungesteuertes Stillsetzen der Achse durch sofortige (< 200 ms) Abschaltung der Energiezufuhr zum Antrieb.
Kategorie 1: Gesteuertes Stillsetzen der Achse durch Unterbrechen der Energiezufuhr zum Antrieb, nach Erreichen des Stillstandes der Achse (= zeitverzögerte Abschaltung der Energiezufuhr).
Kategorie 2: Gesteuertes Stillsetzen der Achse ohne Unterbrechung der Energiezufuhr zum Antrieb.

In vielen Applikationen, wie beispielsweise bei sehr schnell bewegten oder schwerkraftbelasteten Achsen führt eine Abschaltung der Antriebsenergie nicht zum sicheren Stillsetzten der Achse, da die Achse austrudeln oder aufgrund der Schwerkraft absacken kann. Daher werden zusätzlich mechanische Bremsen eingesetzt, üblicherweise Scheibenbremsen, welche z.B. direkt auf die Motorwelle wirken und durch einen bestromten Elektromagneten im störungsfreien Betrieb des Roboters offengehalten sind. Wird die Antriebsenergie abgeschaltet - etwa bei einem Stopp der Kategorie 0 - schließt die Bremse somit automatisch. Allen mechanischen Bremsen ist gemein, dass sie eine gewisse Auslöseverzögerung haben. Bei den zur Zeit gängigen Scheibenbremsen liegt diese z.B. im Bereich von 100 bis 200 ms, bis die Bremsbeläge mit der Bremsscheibe nach dem Ausgeben des Bremssignals in Kontakt kommen.

Da die Abschaltung der Antriebsenergie quasi sofort, d.h. in wenigen Millisekunden nach der Kommandierung (d.h. nach dem Ausgeben des Signals zum Unterbrechen der Energiezufuhr) zu einem Abschalten des Motors führt, trudelt der Antrieb bis zum Greifen der mechanischen Bremse unkontrolliert aus. Außerdem ist das Bremsen mittels der mechanischen Bremse nachteilig, da hohe mechanische Belastungen auf die zu bremsenden Komponenten wirken.

Um diese Nachteile zu vermeiden, ist aus der WO 2009/074 396 A1 beispielsweise eine Kurzschlussbremsung des Motors bekannt, welche das Austrudeln der Achse verkürzen soll. Dazu werden mit dem Abschalten der Antriebsenergie die Motorphasen des elektrischen Motors kurzgeschaltet und so ein Bremsmoment erzeugt. Da die Kurzschlussbremsung in bekannter Weise auf der Induktion von Strömen in die Motorphasen des Motors beruht, ist das erzeugte Bremsmoment jedoch von der Drehzahl des Motors zum Zeitpunkt des Abschaltens der Antriebsenergie abhängig. Insbesondere für langsam bewegte Achsen oder für stehende schwerkraftbelastete Achsen besteht damit grundsätzlich das Problem des Absackens fort.

EP 1857 229 A1 betrifft ein Steuersystem und ein Verfahren zum Steuern eines Industrieroboters mit mindestens einem Motor. Das Steuersystem umfasst mindestens eine Steuereinheit, die ein Steuersignal zum Steuern des Motors erzeugt, mindestens eine Antriebseinheit zum Steuern des Motors, und eine Sicherheitseinheit, die so ausgelegt ist, dass sie mindestens ein Stoppsignal zum Stoppen des Roboters beim Auftreten eines Sicherheitsereignisses erzeugt.

US 5 587 640 A betrifft ein Servomotor-Steuersystem, das bei der Überwindung des Problems des Abschaltens des Servomotors während eines Ausfalls des programmierbaren Steuersystems und / oder des Servoverstärkers unterstützt. Ein Sicherheitsschalter ist zur Erkennung durch das programmierbare Steuersystem angeschlossen, um den Servomotor bei Erkennung der Betätigung des Sicherheitsschalters zu bremsen.

Aufgabe der vorliegenden Erfindung ist es daher ein Verfahren und ein System zum sicheren Stillsetzen der Achse(n) bereitzustellen, das die genannten Nachteile ausräumt und so ein schnelles Stillsetzen der Achse ermöglicht, um insbesondere das Austrudeln und Absacken der Achse zu vermindern bzw. zu vermeiden. Diese Aufgabe wird mit dem Verfahren zum Stillsetzen von Achsen eines Industrieroboters gemäß Anspruch 1 und dem System zum Stillsetzen von Achsen eines Industrieroboters gemäß Anspruch 5 gelöst.

### 3. Ausführliche Beschreibung der Erfindung

Die Erfindung ist in den unabhängigen Ansprüchen definiert. Im Folgenden werden die Teile der Beschreibung und der Zeichnungen, die sich auf Aspekte beziehen, die nicht durch die Ansprüche abgedeckt sind, nicht als Aspekte der Erfindung dargestellt, sondern als Hintergrundwissen oder Beispiele, die für das Verständnis der Erfindung zuträglich sind.

Das erfindungsgemäße Verfahren zum Stillsetzen von Achsen und das erfindungsgemäße System zum Steuern eines Industrieroboters dient insbesondere dazu, die Achsen des Industrieroboters unter Vermeidung eines Austrudelns und/oder Absackens der Achsen bis zum Stillstand der Achsen zu bremsen und die Achsen im unbewegten Zustand bis zum erneuten Anlauf der Achsen zu halten, d.h. stillzusetzen. Besonders bevorzugt ermöglicht das erfindungsgemäße System sowie das erfindungsgemäße Verfahren die Vermeidung des Austrudelns und/oder Absackens auch dann, wenn ein Stopp der Kategorie 0 oder 1 erfolgt, also dem Antrieb keine Antriebsenergie mehr zur Verfügung steht.

Das erfindungsgemäße Verfahren bzw. System betrifft Industrieroboter mit zumindest einer Achse, einem zugehörigen Antrieb und einer entsprechenden Steuereinrichtung. Die Achse bzw. die Achsen können rotatorisch oder translatorisch ausgeprägt sein, wobei jeder Achse vorzugsweise ein Glied und ein Antrieb zugeordnet sind, sodass das Glied mittels des Antriebs entsprechend der Achse translatorisch oder rotatorisch bewegt werden kann.

Der Antrieb umfasst zumindest einen Aktor, der in der vorliegenden Erfindung als elektrischer Motor ausgeprägt ist, und eine zugehörige Leistungselektronik. Vorzugsweise kommen drei-phasen Synchronmaschinen oder Asynchronmaschinen zum Einsatz. Um den Motor zu bewegen, wird die Leistungselektronik von der Steuereinrichtung des Industrieroboters angesteuert bzw. geregelt.

Die Leistungselektronik weist vorzugsweise einen, den Motor antreibenden, Dreiphasen-Wechselrichter und einen dem Wechselrichter vorgeschalteten Zwischenkreis auf, der aus einem Gleichrichter gespeist wird. Der Wechselrichter erzeugt z.B. mittels Puls-Weiten-Modulation (PWM) aus einer Gleichspannung des Zwischenkreises eine dreiphasige Wechselspannung mit einstellbarer Frequenz und Amplitude entsprechend der Steuersignale der Steuereinrichtung.

Die Steuereinrichtung kann sowohl die zur Steuerung und oder Regelung des Motors notwendige Hardware, als auch die notwendige Software umfassen. Eine vollständig auf Hardware basierende Steuereinrichtung ist ebenfalls im Sinne der Erfindung denkbar. Die Steuereinrichtung ist dazu eingerichtet den Motor mittels Steuersignalen über die Leistungselektronik anzusteuern und die Achsen zu überwachen. Dabei setzt die Steuereinrichtung Sollwerte, wie beispielsweise Drehwinkel, Drehzahl oder Beschleunigung des Motors in Signale, die von der Leistungselektronik verarbeitet werden können, um. Die Verwendung des Begriffs "Steuersignale" schließt hierin den Fall eines einzelnen Steuersignals mit ein.

Neben der eigentlichen Steuerung und Regelung der Achsen ist die Steuereinrichtung bevorzugt dazu eingerichtet Signale zum Stillsetzen der Achsen zu senden. Beispielsweise wird ein Signal zum Stillsetzen der Achsen dann gesendet, wenn die Steuereinrichtung einen Steuerfehler detektiert. Ein Steuerfehler kann auf der Auslösung eines Sensors beruhen, der beispielsweise die Sicherheit der Umgebung des Industrieroboters überwacht. Ein Signal zur Stillsetzung kann überdies auch durch die manuelle Betätigung eines Not-Aus-Schalters oder ähnliches erzeugt werden. Weiter können Steuerfehler auch von der Steuereinrichtung selbst erkannt werden, indem zulässige Grenzwerte des Antriebs und/oder des Manipulators überschritten werden. Mögliche Grenzwerte bilden unter anderem zulässige Höchstgeschwindigkeiten, Beschleunigungen, Motorströme und Manipulator-Positionen.

Die Signale zum Stillsetzen der Achse können unter anderem das Auslösen einer mechanischen Bremse sowie eine elektrische Bremsung des Motors herbeiführen. Dabei ist vorzugsweise jedem elektrischen Motor des Industrieroboters eine mechanische Bremse zugeordnet. Zumindest sind jedoch die Motoren schwerkraftbelasteter Achsen mit einer mechanischen Bremse ausgestattet. Die mechanische Bremse ist bevorzugt der Motorwelle zugeordnet und als Scheibenbremse ausgeführt. Andere geeignete Bremsen sind jedoch ebenfalls möglich. Haltebremsen haben die Aufgabe, bewegte Massen oder Lasten aus der Bewegung abzubremsen, bzw. diese im Stillstand sicher zu halten. Wie eingangs beschrieben, unterliegen solche mechanischen Bremsen einer gewissen Auslöseverzögerung, d.h. zwischen der Kommandierung (Ausgeben) des Signals zur Bremsung und dem tatsächlichen Greifen der Bremse (Erzeugen eines Bremsmoments) liegt eine Zeitspanne von üblicherweise 100 bis 200 ms, die vom verwendeten Bremssystem abhängig ist.

Erfindungsgemäß ist als elektrische Bremsung eine elektrische Gleichstrombremsung kombiniert mit einer Kurzschlussbremsung vorgesehen, die jedoch mit anderen elektrischen Bremsmethodenkombiniert werden können. Dies ist insbesondere bei sehr schweren Robotern vorteilhaft und kann etwa sinnvoll sein, wenn der Motor zum Zeitpunkt des Bremsbefehls noch eine ausreichend große Drehzahl hat. Die erfindungsgemäße Gleichstrombremsung kommt in diesem Fall erst dann zum Einsatz, wenn die Kurzschlussbremsung den Motor auf eine bestimmte Drehzahl abgebremst hat.

Um die Gleichstrombremsung auszulösen ist eine DC-Quelle vorgesehen, die eingerichtet ist, um einen Gleichstrom zu erzeugen. Die DC-Quelle ist derart mit dem Motor verbunden, dass ein Gleichstrom in zumindest eine Motorphase des Motors eingespeist werden kann. Vorzugsweise wird der Gleichstrom in zumindest zwei Motorphasen eingespeist. Aufgrund des eingespeisten Gleichstroms entsteht im Motor ein statisches Magnetfeld, welches ein Bremsmoment erzeugt und den Motor abbremst bis dieser steht. Das aus der Gleichstrombremsung resultierende Bremsmoment ist unabhängig von der Motordrehzahl und entspricht vorzugsweise dem maximalen Drehmoment (Haltemoment) des Motors. Die Gleichstrombremsung eignet sich somit neben dem eigentlichen Abbremsen der stillzusetzenden Achse auch zum Halten der Achse in der gewünschten Position.

Die DC-Quelle ist gemäß einer bevorzugten Ausführungsform der Erfindung eine eigenständige, von der Energieversorgung des Motors verschiedene Energiequelle. Dem Motor kann somit auch nach einem Stopp der Kategorie 0 oder 1 (d.h. nach Abschalten der Antriebsenergie) Gleichstrom aus der DC-Quelle zugeführt werden, um ein Bremsmoment (bzw. Haltemoment) zu erzeugen. Vorzugsweise ist die DC-Quelle ein Akkumulator oder ein Kondensator. Eine solche DC-Quelle sowie eine erfindungsgemäße Steuereinrichtung können für jede stillzusetzende Achse separat vorgesehen sein. Alternative kann die Gleichstrombremsung mehrerer Motoren (d.h. die Bremsung mehrere Achsen) von einer DC-Quelle und einer Steuereinrichtung ausgeführt werden.

### 4. Beschreibung von bevorzugten Ausführungsformen

Im Folgenden werden bevorzugte Ausführungsformen der Erfindung unter Bezugnahme auf die beigefügten Figuren genauer erläutert. Hierbei zeigt:
- Fig. 1: einen Industrieroboter, welcher sechs Achsen A1-A6 aufweist;
- Fig. 2: ein schematisches Signal- und Energieflussdiagramm des Systems zur Steuerung eines Industrieroboters;
- Fig. 3: ein Signal- und Energieflussdiagramm des Systems zur Steuerung eines Industrieroboters gemäß einer ersten Ausführungsform der Erfindung; und
- Fig. 4: ein Signal- und Energieflussdiagramm des Systems zur Steuerung eines Industrieroboters gemäß einer zweiten Ausführungsform der Erfindung.

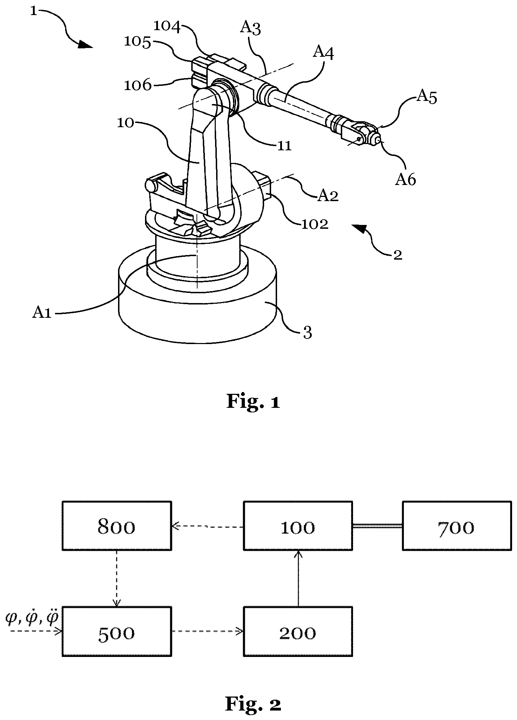

In Fig. 1 ist ein Industrieroboter 1 dargestellt, der einen Manipulator 2 aufweist, der um eine als Vertikalachse ausgebildete Achse A1 drehbar auf einer Roboterbasis 3 steht. Der Manipulator 2 weist insgesamt 6 rotatorische Achsen A1-A6 auf, die durch elektrische Motoren 102, 104, 105, 106 angetrieben werden. Die elektrischen Motoren der Achsen A1 und A3 sind aufgrund der Perspektive nicht sichtbar.

Fig. 2 zeigt ein schematisches Signal- und Energieflussdiagramm des Systems zur Steuerung eines Industrieroboters. In Fig. 2 sind Signalpfade als gestrichelte Linie dargestellt, Energiepfade als durchgezogene Linie, wenn es sich um elektrische Energiepfade handelt und als doppelte Linie, wenn es sich um kinetische Energiepfade handelt.

Ein Signal zur Ausführung einer Sollbewegung einer Achse 700 wird beispielsweise von einem Steuerprogramm in Form eines Motorwinkels ϕ, einer Motordrehzahl ϕ̇ und/oder einer Motorbeschleunigung ϕ̈ an die Steuereinrichtung 500 übergeben. Diese setzt das Signal für die Leistungselektronik 200 um. In der Leistungselektronik wird entsprechend des Signals eine in Frequenz und Amplitude veränderliche drei-phasige Wechselspannung oder ein Wechselstrom zur Ansteuerung des Motors 100 erzeugt, welcher über die Motorwelle eine Achse 700 antreibt. Die Bewegungen des Motors ϕ,ϕ̇,ϕ̈ werden von einer Sensorik 800 überwacht und so die Istwerte der Bewegung ermittelt. Durch die Rückführung der Istwerte wird der Regelkreis geschlossen.

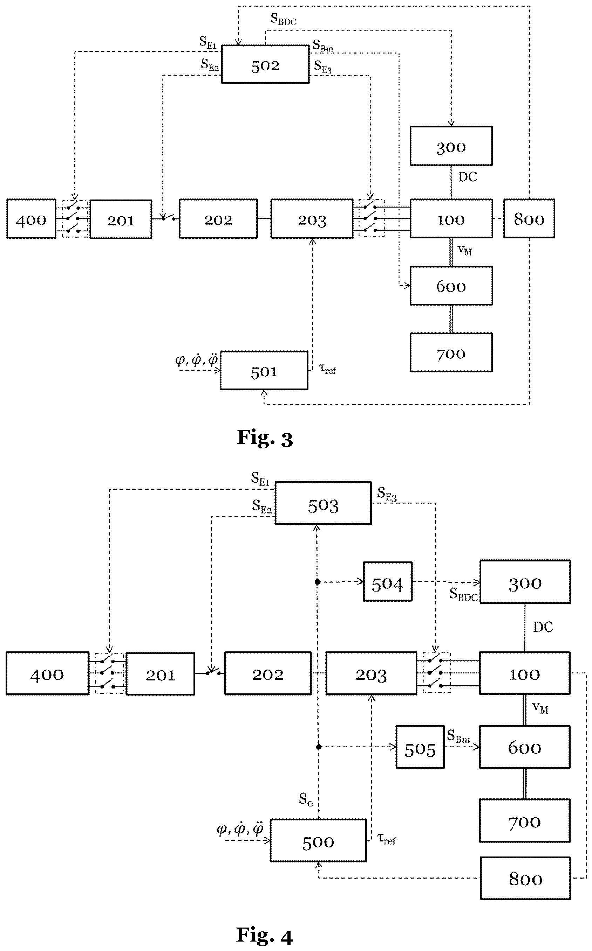

Fig. 3 zeigt ein Signal- und Energieflussdiagramm des Systems zur Steuerung eines Industrieroboters gemäß einer ersten Ausführungsform der Erfindung. Das System umfasst einen Industrieroboter der zumindest eine Achse 700, eine mechanische Bremse 600, einen elektrischer Motor 100 mit zugehöriger Leistungselektronik und eine Steuereinrichtung aufweist. Der Achse 700 ist der Motor 100 zugeordnet, der von der Leistungselektronik angesteuert wird. Die Leistungselektronik umfasst einen Gleichrichter 201, einen Zwischenkreis 202 und einen Wechselrichter 203 und wird von einer Netzquelle 400 mit Energie versorgt. Eine DC-Quelle 300 ist mit dem Motor 100 in der Art verbunden, dass Gleichstrom in zumindest eine der Motorphasen eingespeist werden kann, um ein Bremsmoment zu erzeugen. Der Motor wird durch die Sensorik 800 überwacht, welche relevante Motorparameter wie die Drehzahl, Drehmoment o.ä. an die Steuereinrichtung übermittelt.

Die Steuereinrichtung ist in der gezeigten Ausführungsform der Erfindung zweigeteilt und umfasst eine Nicht-sichere Steuerung 501 und eine Sichere Steuerung 502. Sowohl die Nicht-sichere Steuerung 501 als auch die Sichere Steuerung 502 umfassen sowohl Software als auch Hardwarekomponenten und können redundante Systeme sein.

Die Nicht-Sichere Steuerung 501 ist dazu eingerichtet den Motor mittels Steuersignalen τ_{ref} über die Leistungselektronik anzusteuern und die Sensorik 800 der Achse(n) zu überwachen, damit eine Regelung der Achsen im geschlossenen Regelkreis möglich ist. Die Sichere Steuerung 502 überwacht u.a. die Sensorik 800 und vergleicht die Messwerte mit zulässigen Grenzwerten um Steuerfehler zu erkennen. Erfasst die Sichere-Steuerung 502 z.B. einen Steuerfehler, wird ein Signal zum Stillsetzen der Achse ausgegeben.

Im Falle eines Stopps der Kategorie 0 ("Not-aus") oder der Kategorie 1 gibt die Sichere Steuerung ein Signal zum Stillsetzen der Achse S_{Bm} an die mechanische Bremse und vorzugsweise gleichzeitig ein Signal zum Stillsetzen der Achse S_{BDC} an die DC-Quelle aus. Zudem wird ein Signal, vorzugsweise von der Sicheren Steuerung, zum Trennen der Antriebsenergie ausgegeben. Die Trennung erfolgt bevorzugt durch die Adressierung geeigneter Schalter, die beispielsweise als Leistungstransistoren wie Bipolartransistoren oder IGBTs ausgebildet sind. In der Ausführungsform der Fig. 3 kann die Trennung der Antriebsenergie vom Motor beispielhaft auf drei verschiedene Arten realisiert werden; nämlich indem die gesamte Leistungselektronik von der Netzquelle 400 getrennt wird (Signal S_{E1}), oder über eine Trennung des Zwischenkreises 201 vom Gleichrichter 202 (Signal S_{E2}) oder durch eine Trennung der Leistungselektronik vom Motor (Signal S_{E3}). In der Praxis wird eine der drei Arten genügen und bevorzugt ist dies die Trennung der Leistungselektronik vom Motor (Signal S_{E3}). Die unterschiedlichen Schalteranordnungen können aber auch kombiniert werden.

In Reaktion auf das Signal zum Stillsetzen der Achse S_{BDC} wird ein Gleichstrom in zumindest eine Motorphase des Motors eingespeist, um ein Bremsmoment zu erzeugen. In einer Ausführungsform der Erfindung ist die geregelte DC-Quelle 300 Teil der Leistungselektronik und ist dazu eingerichtet aus dem Gleichrichter 201, jedoch bevorzugt aus einem Zwischenkreis 202 der Leistungselektronik gespeist zu werden. In einer besonders bevorzugten Ausführungsform der Erfindung wird die DC-Quelle 300 aus einem Zwischenkreiskondensator gespeist, bzw. ist der Zwischenkondensator, so dass das System auch nach Trennung der Leistungselektronik von der Netzquelle 400 (Signal S_{E1}) eine Gleichstrombremsung durchführen kann.

Alternativ kann die DC-Quelle 300 auch eine völlig redundante DC-Quelle sein, und ist bevorzugt eine geregelte DC-Quelle. Die geregelte DC-Quelle ist vorzugsweise dazu eingerichtet einen geregelten Gleichstrom zu erzeugen, welcher Gleichstrom einen vorgegebenen Maximalwert nicht überschreitet, um eine Beschädigung des Motors auszuschließen. Weiter kann die geregelte DC-Quelle so eingerichtet sein, dass über den Zeitraum des Einspeisens des Gleichstroms in die Motorphase der Gleichstrom konstant gehalten wird.

Entsprechend der Erfindung ist vorgesehen zusätzlich zur erfindungsgemäßen DC Bremsung eine Kurzschlussbremsung auszuführen. Die Kurzschlussbremsung des Motors ist der Gleichstrombremsung (d.h. dem Ausgeben des Signals zum Stillsetzen der Achse an die DC-Quelle S_{BDC}) vorgeschaltet. Die Steuereinrichtung gibt dazu ein Signal zum Auslösen einer Kurzschlussbremsung aus, wodurch die Motorphasen kurzgeschlossen werden. Der Kurzschluss erzeugt ein von der Motordrehzahl abhängiges Bremsmoment. Dabei können die Motorphasen bsp. über einen Bremswiderstand kurzgeschlossen werden. Diesbezüglich wird beispielhaft auf die Eingangs erwähnte WO 2009/074 396 A1 verwiesen. Die Kurzschlussbremsung kann durch die Sichere-Steuerung, als auch durch die Nicht-Sichere Steuerungen ausgelöst werden. Insbesondere bei hohen Motordrehzahlen erzeugt die Kurzschlussbremsung ein hohes Bremsmoment. Bei geringen Motordrehzahlen sinkt das erzielbare Bremsmoment stark ab, so dass dann die Gleichstrombremsung zum Einsatz kommt.

In einer weiteren Ausführungsform der Erfindung erfolgt das Ausgeben des Signals zum Stillsetzen der Achse an die DC-Quelle S_{BDC} in Abhängigkeit von Motorparametern, wie Motorstrom bzw. Motordrehzahl bzw. Achsgeschwindigkeit. Vorzugsweise wird das Signal zum Stillsetzen der Achse an die DC-Quelle S_{BDC} erst ausgelöst, wenn die Motordrehzahl einen Wert von 1000 U/min, bevorzugt 100 U/min und besonders bevorzugt 10 U/min unterschritten hat. Wie erwähnt, nimmt bei einer Kurzschlussbremsung das Bremsmoment mit sinkender Drehzahl des Motors ab. Unterschreitet das Bremsmoment einen Grenzwert, wird daher auf die erfindungsgemäße Gleichstrombremsung umgeschaltet, die drehzahlunabhängig wirkt.

Die vorliegende Erfindung ermöglicht ein sehr schnelles Stillsetzen des Motors und stoppt den Motor vorzugsweise vollständig bevor die mechanische Bremse greift. D.h. der Motor wird vorzugsweise während der Auslöseverzögerung der mechanischen Bremse elektrisch bis zum Stillstand abgebremst, so dass die mechanische Bremse als reine Haltebremse fungiert. Auf diese Weise werden die mechanischen Belastungen an der Achse vorteilhaft minimiert.

Fig. 4 zeigt ein Signal- und Energieflussdiagramm gemäß einer zweiten Ausführungsform der Erfindung. Im Unterschied zu dem in Fig. 3 gezeigten System, gibt die Steuereinrichtung 500, welche sowohl eine Sichere als auch eine Nicht-Sichere-Steuerung umfassen kann, das Signal zum Stillsetzen der Achse Sₒ aus. Weitere Steuereinrichtungen 503, 504, 505 empfangen das Signal Sₒ und wandeln das Signal zum Stillsetzen der Achse in Signale zum Trennen der Antriebsenergie S_{E1}, S_{E2}, S_{E3} (in der Praxis wird die Trennung üblicherweise nur an einer Stelle erfolgen), in Signale zum Auslösen der Gleichstrombremsung S_{BDC} und in Signale zum Auslösen der mechanischen Bremsung S_{Bm} um. Dabei erzeugt die Energieabschaltungseinrichtung 503 die Signale S_{E1}, S_{E2}, und/oder S_{E3} und sendet diese an die entsprechenden Schalter um die Antriebsenergie vom Motor zu trennen. Die DC-Bremsauslöseeinrichtung 504 erzeugt das Signal zum Auslösen der Gleichstrombremsung S_{BDC} und sendet dies an die DC-Quelle 300, um die Gleichstrombremsung auszulösen. Die mechanische Bremsauslöseeinrichtung 505 erzeugt ein Signal zur Auslösung der mechanischen Bremsung S_{Bm} und sendet dies an die mechanische Bremse 600. Die Steuereinrichtungen 503, 504, 505 können das Signal Sₒ verzögert umsetzen, um so eine gewünschte zeitliche Signalfolge zu erzielen. Nicht dargestellt ist eine Einrichtung zum Auslösen einer Kurzschlussbremsung. Diese kann jedoch wie bereits beschrieben analog implementiert werden.

### 5. Bezugszeichenliste:

- 1:: Industrieroboter
- 2:: Manipulator
- 3:: Roboterbasis
- 10:: Glied
- 11:: Gelenk
- 100:: Elektrischer Motor
- 102:: Motor, der der Achse A2 zugeordnet ist
- 104:: Motor, der der Achse A4 zugeordnet ist
- 105:: Motor, der der Achse A5 zugeordnet ist
- 106:: Motor, der der Achse A6 zugeordnet ist
- 200: Leistungselektronik
- 201:: Gleichrichter
- 202:: Zwischenkreis
- 203:: Wechselrichter
- 300:: DC-Quelle
- 400:: Netzquelle
- 500: Steuereinrichtung
- 501:: Nicht-Sichere Steuerung
- 502:: Sichere Steuerung
- 503:: Energieabschaltungseinrichtung (Sichere Steuerung)
- 504:: DC-Bremsauslöseeinrichtung (Sichere Steuerung)
- 505:: Mechanische Bremsauslöseeinrichtung (Sichere Steuerung)
- 600:: Mechanische Bremse
- 700:: Achse
- 800:: Sensorik
- A1-A6:: Achsen des Industrieroboters
- S_{E1}, S_{E2}, S_{E3}:: Signal zum Trennen der Antriebsenergie
- S_{BDC}:: Signal zum Auslösen einer Gleichstrombremsung
- S_{Bm}:: Signal zum Auslösen einer mechanischen Bremsung
- Sₒ:: Signal zum Stillsetzen der Achse
- v_{M}:: Geschwindigkeit des Motors (Istwert)
- τ_{ref}:: Steuersignal
- ϕ,ϕ̇,ϕ̈:: Motorwinkel, Motordrehzahl, Motorbeschleunigung (Sollwerte)

## Patentansprüche

1. Verfahren zum Stillsetzen von Achsen eines Industrieroboters (1), wobei der Industrieroboter zumindest eine Steuereinrichtung (500), eine Leistungselektronik (200), eine DC-Quelle (300) und zumindest eine Achse (700), der ein elektrischer Motor (100) und eine mechanische Bremse (600) zugeordnet ist, umfasst,
und wobei die Steuereinrichtung (500) dazu eingerichtet ist, den zumindest einen Motor (100) mittels Steuersignalen (τ_{ref}) über die Leistungselektronik (200) anzusteuern,
welches Verfahren die folgenden Schritte aufweist:
a) Ausgeben eines Signals zum Stillsetzen der zumindest einen Achse von der Steuereinrichtung (500) an die mechanische Bremse (600), wobei zwischen der Ausgabe des Signals und dem tatsächlichen Greifen der Bremse eine Zeitspanne vorliegt;
b) Ausgeben eines Signals zum Auslösen einer Kurzschlussbremsung mittels der Steuereinrichtung (500) und kurzschließen der Motorphasen, um ein Bremsmoment zu erzeugen
c) Ausgeben eines Signals zum Stillsetzen der zumindest einen Achse von der Steuereinrichtung (500) an die DC-Quelle (300) bevor die mechanische Bremse (600) greift und einspeisen eines Gleichstroms von der DC-Quelle (300) in zumindest eine Motorphase des der zumindest einen Achse zugeordneten Motors (100), so dass ein Bremsmoment erzeugt wird.

2. Verfahren nach Anspruch 1, wobei die Leistungselektronik (200) einen Gleichrichter (201), einen Zwischenkreis (202) und einen Wechselrichter (203) umfasst und von einer Netzquelle (400) mit Energie versorgt wird, und wobei die Signale in den Schritten a) und c) einen Stopp der Kategorie 0 oder 1 auslösen, so dass der Motor (100) von der Antriebsenergie getrennt wird,
wobei die Kategorie 0 ein ungesteuertes Stillsetzen der Achse durch sofortige Abschaltung der Energiezufuhr zum Antrieb umfasst,
und wobei die Kategorie 1 ein gesteuertes Stillsetzen der Achse durch Unterbrechen der Energiezufuhr zum Antrieb nach Erreichen des Stillstandes der Achse umfasst.

3. Verfahren nach dem vorhergehenden Anspruch, wobei die Trennung der Antriebsenergie die Leistungselektronik (200) von der Netzquelle (400) trennt, bevorzugt den Zwischenkreis (202) vom Gleichrichter (201) und besonders bevorzugt die Leistungselektronik (200) vom Motor (100) trennt.

4. Verfahren nach einem der vorhergehenden Ansprüche, wobei Schritt c) des Verfahrens in Abhängigkeit von Motorparametern ausgelöst wird und wobei Schritt c) vorzugsweise erst dann erfolgt, wenn die Motordrehzahl einen Wert von 1000 U/min, bevorzugt 100 U/min und besonders bevorzugt 10 U/min unterschritten hat.

5. System zum Stillsetzen von Achsen eines Industrieroboters (1), wobei der Industrieroboter (1) aufweist:
zumindest eine Achse (700), der ein elektrischer Motor (100) und eine mechanische Bremse (600) zugeordnet ist;
eine Steuereinrichtung (500);
eine DC-Quelle (300); und
eine Leistungselektronik (200), wobei
die Steuereinrichtung (500) dazu eingerichtet ist den Motor (100) mittels Steuersignalen über die Leistungselektronik (200) anzusteuern, und wobei das System dazu eingerichtet ist, um das Verfahren nach einem der Ansprüche 1 bis 4 durchzuführen, und
wobei die Steuereinrichtung (500) eingerichtet ist, um die elektrische Bremsung des Motors (100) vor dem Eingriff der mechanischen Bremse (600) herbeizuführen.

6. System nach Anspruch 5 oder Verfahren nach einem der Ansprüche 1 bis 4, wobei die DC-Quelle (300) eine eigenständige Energiequelle ist, so dass das auch nach Abschalten der Antriebsenergie des elektrischen Motors im Falle eines Stopps der Kategorie o oder 1 eine Gleichstrombremsung durchführbar ist,
wobei die Kategorie 0 ein ungesteuertes Stillsetzen der Achse durch sofortige Abschaltung der Energiezufuhr zum Antrieb umfasst,
und wobei die Kategorie 1 ein gesteuertes Stillsetzen der Achse durch Unterbrechen der Energiezufuhr zum Antrieb nach Erreichen des Stillstandes der Achse umfasst.

7. System nach einem der Ansprüche 5 bis 6 oder Verfahren nach einem der Ansprüche 1 bis 4, wobei die DC-Quelle (300) eine eigenständige von der Leistungselektronik (200) des Motors (100) verschiedene Energiequelle ist, oder wobei die DC-Quelle (300) Teil der Leistungselektronik (200) ist und dazu eingerichtet ist bevorzugt aus einem Zwischenkreis (202) der Leistungselektronik (200) gespeist zu werden, und zwar bevorzugt aus dem Zwischenkreiskondensator gespeist zu werden, so dass auch nach Abschalten der Antriebsenergie des elektrischen Motors eine Gleichstrombremsung durchführbar ist.

8. System nach einem der Ansprüche 5 bis 7 oder Verfahren nach einem der Ansprüche 1 bis 4, wobei die DC-Quelle (300) eine geregelte DC-Quelle ist, und wobei die geregelte DC-Quelle dazu eingerichtet ist einen geregelten Gleichstrom zu erzeugen, welcher Gleichstrom einen vorgegebenen Maximalwert nicht überschreiten soll und vorzugsweise über den Zeitraum des Einspeisens des Gleichstroms in die Motorphase konstant gehalten wird.

9. System nach einem der Ansprüche 5 bis 8 oder Verfahren nach einem der Ansprüche 1 bis 4, wobei die Steuereinrichtung (500) zumindest eine Nicht-Sichere-Steuerung (501) und eine Sichere-Steuerung (502) umfasst, und wobei die Nicht-sichere Steuerung (501) den zumindest einen Motor (100) mittels Steuersignalen über die Leistungselektronik (200) ansteuert, welche Leistungselektronik (200), abhängig von den Steuersignalen, aus der Netzquelle (400) eine in ihrer Frequenz und Amplitude veränderbare Wechselspannung für die Versorgung und Steuerung des zumindest einen Motors (100) generiert und wobei
die Sichere-Steuerung (502) einen Stopp der Kategorie 0 oder 1 auslöst, wenn vorgegebene Grenzwerte überschritten werden, so dass der Motor (100) von der Antriebsenergie getrennt wird,
wobei die Kategorie 0 ein ungesteuertes Stillsetzen der Achse durch sofortige Abschaltung der Energiezufuhr zum Antrieb umfasst,
und wobei die Kategorie 1 ein gesteuertes Stillsetzen der Achse durch Unterbrechen der Energiezufuhr zum Antrieb nach Erreichen des Stillstandes der Achse umfasst.

## Claims

1. A method for stopping axes of an industrial robot (1), wherein the industrial robot comprises at least one control device (500), power electronics (200), a DC source (300) and at least one axis (700) to which an electric motor (100) and a mechanical brake (600) are assigned, and wherein the control device (500) is arranged to drive the at least one motor (100) by means of control signals (τ_{ref}) via the power electronics (200), which method comprises the following steps:
(a) outputting a signal for stopping the at least one axis from the control device (500) to the mechanical brake (600), wherein there is a time interval between the output of the signal and the actual engagement of the brake;
b) outputting a signal to initiate short-circuiting braking by the control device (500) and short-circuiting the motor phases to generate a braking torque
c) outputting a signal to stop the at least one axis from the control device (500) to the DC source (300) prior the mechanical brake (600) engages and injecting a DC current from the DC source (300) into at least one motor phase of the motor (100) associated with the at least one axis so that a braking torque is generated.

2. The method according to claim 1, wherein the power electronics (200) comprise a rectifier (201), an intermediate circuit (202) and an inverter (203) and are supplied with power by a mains power source (400) and wherein the signals in steps a) and c) activate a stop of category o or 1, so that the motor (100) is disconnected from the operating power,
wherein category o comprises an uncontrolled stopping of the axis by immediate disconnection of the energy supply to the drive,
and wherein category 1 comprises a controlled stopping of the axis by interrupting the energy supply to the drive after the axis has come to a standstill.

3. The method according to the preceding claim, wherein the disconnection of the operating power disconnects the power electronics (200) from the mains power source (400), preferably disconnects the intermediate circuit (202) from the rectifier (201) and particularly preferably disconnects the power electronics (200) from the motor (100).

4. The method according to any one of the preceding claims, wherein step c) of the method is activated in dependence of motor parameters, and wherein step c) preferably occurs only when the motor rotational speed has fallen below a value of 1000 rpm, preferably 100 rpm, and particularly preferably 10 rpm.

5. A system for stopping of axes of the industrial robot (1), wherein the industrial robot (1) has:
at least one axis (700), which is assigned to an electric motor (100) and a mechanical brake (600);
a control device (500);
a DC source (300); and
power electronics (200), wherein
the control device (500) is configured to actuate the motor (100) using control signals from the power electronics (200), and wherein the system is configured to perform the method of any one of claims 1 to 4, and
wherein the control device (500) is configured to cause electrical braking of the motor (100) prior to engagement of the mechanical brake (600).

6. The system of claim 5 or the method of any one of claims 1 to 4, wherein the DC source (300) is a stand-alone power source such that DC braking can be performed even after the drive power to the electric motor is cut off in the event of a category o or 1 stop,
wherein category o comprises an uncontrolled stopping of the axis by immediate disconnection of the energy supply to the drive,
and wherein category 1 comprises a controlled stopping of the axis by interrupting the energy supply to the drive after the axis has come to a standstill.

7. The system according to any one of claims 5 to 6 or the method according to any one of claims 1 to 4, wherein the DC source (300) is an independent power source distinct from the power electronics (200) of the motor (100), or wherein the DC source (300) is part of the power electronics (200) and is configured to be preferably fed from an intermediate circuit (202) of the power electronics (200), and preferably to be fed from the intermediate circuit capacitor, so that DC braking can be performed even after the drive energy of the electric motor has been switched off.

8. The system according to any one of claims 5 to 7 or the method according to any one of claims 1 to 4, wherein the DC source (300) is a regulated DC source, and wherein the regulated DC source is configured to generate a regulated DC current, which DC current is not to exceed a predetermined maximum value and is preferably kept constant over the period of feeding the DC current into the motor phase.

9. The system according to any one of claims 5 to 8 or the method according to any one of claims 1 to 4, wherein the control device (500) comprises at least one non-safe controller (501) and one safe controller (502), and wherein the non-safe controller (501) controls the at least one motor (100) by means of control signals via the power electronics (200), which power electronics (200), depending on the control signals, generate from the mains power source (400) an alternating voltage which can be varied in its frequency and amplitude for the supply and control of the at least one motor (100), and wherein
the safe control (502) triggers a stop of category 0 or 1 when predetermined limit values are exceeded, so that the motor (100) is disconnected from the drive power,
wherein category o comprises an uncontrolled stopping of the axis by immediately disconnecting the power supply to the drive,
and wherein category 1 comprises a controlled stopping of the axis by interrupting the energy supply to the drive after the axis has reached standstill.

## Revendications

1. Procédé pour immobiliser des axes d'un robot industriel (1), dans lequel le robot industriel comprend au moins un équipement de commande (500), une électronique de puissance (200), une source de courant continu (300) et au moins un axe (700) auquel sont associés un moteur électrique (100) et un frein électrique (600),
et dans lequel l'équipement de commande (500) est agencé pour commander l'au moins un moteur (100) au moyen de signaux de commande (τ_{ref}) par l'intermédiaire de l'électronique de puissance (200),
lequel procédé comporte les étapes suivantes :
a) envoi au frein électrique (600) d'un signal pour immobiliser l'au moins un axe par l'équipement de commande (500), un laps de temps s'écoulant entre l'envoi du signal et l'action effective du frein ;
b) envoi d'un signal pour déclencher un freinage à court-circuit au moyen de l'équipement de commande (500) et court-circuiter les phases de moteur afin de produire un couple de freinage ;
c) envoi à la source de courant continu (300) d'un signal pour immobiliser l'au moins un axe par l'équipement de commande (500) avant que le frein électrique (600) n'agisse, et injection d'un courant continu par la source de courant continu (300) dans au moins une phase de moteur du moteur (100) associé à l'au moins un axe, de façon à générer un couple de freinage.

2. Procédé selon la revendication 1, dans lequel l'électronique de puissance (200) comprend un redresseur (201), un circuit intermédiaire (202) et un onduleur (203) et est alimentée en énergie par une source de réseau (400), et les signaux aux étapes a) et c) déclenchent un arrêt de catégorie 0 ou 1, de façon que le moteur (100) soit séparé de l'énergie d'entraînement,
la catégorie 0 comprenant une immobilisation non commandée de l'axe par coupure immédiate de l'alimentation en énergie d'entraînement,
et la catégorie 1 comprenant une immobilisation commandée de l'axe par interruption de l'alimentation en énergie d'entraînement après atteinte de l'immobilisation de l'axe.

3. Procédé selon la revendication précédente, dans lequel la séparation de l'énergie d'entraînement sépare l'électronique de puissance (200) de la source de réseau (400), préférentiellement sépare le circuit intermédiaire (202) du redresseur (201), et particulièrement préférentiellement, sépare l'électronique de puissance (200) du moteur (100).

4. Procédé selon l'une des revendications précédentes, dans lequel l'étape c) du procédé est déclenchée en fonction de paramètres de moteur, et l'étape c) n'intervient de préférence que lorsque le régime moteur est passé sous une valeur de 1 000 tours/minute, préférentiellement de 100 tours/minute, et particulièrement préférentiellement, de 10 tours/minute.

5. Système pour immobiliser des axes d'un robot industriel (1), dans lequel le robot industriel (1) comprend :
au moins un axe (700) auquel un moteur électrique (100) et un frein électrique (600) sont associés ;
un équipement de commande (500) ;
une source de courant continu (300) ; et
une électronique de puissance (200), dans lequel l'équipement de commande (500) est agencé pour commander le moteur (100) au moyen de signaux de commande par l'intermédiaire de l'électronique de puissance (200), et le système est agencé pour mettre en œuvre le procédé selon l'une des revendications 1 à 4, et
l'équipement de commande (500) est agencé pour provoquer le freinage électrique du moteur (100) avant l'action du frein électrique (600).

6. Système selon la revendication 5 ou procédé selon l'une des revendications 1 à 4, dans lequel la source de courant continu (300) est une source d'énergie autonome, de sorte qu'un freinage à courant continu est réalisable même après coupure de l'énergie d'entraînement du moteur électrique en cas d'arrêt de catégorie 0 ou 1,
la catégorie 0 comprenant une immobilisation non commandée de l'axe par coupure immédiate de l'alimentation en énergie d'entraînement,
et la catégorie 1 comprenant une immobilisation commandée de l'axe par interruption de l'alimentation en énergie d'entraînement après atteinte de l'immobilisation de l'axe.

7. Système selon l'une des revendications 5 à 6 ou procédé selon l'une des revendications 1 à 4, dans lequel la source de courant continu (300) est une source d'énergie autonome différente de l'électronique de puissance (200) du moteur (100), ou dans lequel la source de courant continu (300) fait partie de l'électronique de puissance (200) et est agencée pour être alimentée préférentiellement à partir d'un circuit intermédiaire (202) de l'électronique de puissance (200), et plus précisément préférentiellement à partir d'un condensateur de circuit intermédiaire, de sorte qu'un freinage à courant continu est réalisable même après coupure de l'énergie d'entraînement du moteur électrique.

8. Système selon l'une des revendications 5 à 7 ou procédé selon l'une des revendications 1 à 4, dans lequel la source de courant continu (300) est une source de courant continu régulée, et la source de courant continu régulée est agencée pour générer un courant continu régulé, lequel courant continu ne doit pas dépasser une valeur maximale prescrite et, de préférence, est maintenu constant pendant la durée de l'injection du courant continu dans la phase de moteur.

9. Système selon l'une des revendications 5 à 8 ou procédé selon l'une des revendications 1 à 4, dans lequel l'équipement de commande (500) comprend au moins une commande non sûre (501) et une commande sûre (502), la commande non sûre (501) commandant l'au moins un moteur (100) au moyen de signaux de commande par l'intermédiaire de l'électronique de puissance (200), laquelle électronique de puissance (200) génère, en fonction des signaux de commande, à partir de la source de réseau (400), une tension alternative modifiable en fréquence et en amplitude pour l'alimentation et la commande du au moins un moteur (100) et dans lequel
la commande sûre (502) déclenche un arrêt de catégorie 0 ou 1 lorsque des valeurs limites prescrites sont dépassées, de sorte que le moteur (100) est séparé de l'énergie d'entraînement,
la catégorie 0 comprenant une immobilisation non commandée de l'axe par coupure immédiate de l'alimentation en énergie d'entraînement,
et la catégorie 1 comprenant une immobilisation commandée de l'axe par interruption de l'alimentation en énergie d'entraînement après atteinte de l'immobilisation de l'axe.
